# EUROPÄISCHE PATENTSCHRIFT

(11) **EP 3 071 734 B1**
(45) Veröffentlichungstag und Bekanntmachung des Hinweises auf die Patenterteilung: **01.08.2018**
(21) Anmeldenummer: 14802618.0
(22) Anmeldetag: 19.11.2014
(51) Int. Cl.: C25B 1/04, C01B 15/08, C25B 15/08, H01M 8/06, C01B 3/00, H01M 8/18, H01M 8/04, H01M 8/0656, H01M 8/04007, H01M 8/04082

(54) **ANLAGE UND VERFAHREN ZUM SPEICHERN UND ZUM FREISETZEN VON ENERGIE**
SYSTEM AND METHOD FOR STORING AND RELEASING ENERGY
INSTALLATION ET PROCÉDÉ POUR ACCUMULER ET LIBÉRER DE L'ÉNERGIE

(30) Priorität: 19.11.2013 DE 102013223589
(43) Veröffentlichungstag der Anmeldung: 28.09.2016
(73) Patentinhaber: Hydrogenious Technologies GmbH, 91058 Erlangen (DE)
(72) Erfinder: BÖSMANN, Andreas, 91093 Hessdorf (DE); PREUSTER, Patrick, 91180 Heideck (DE); SCHMIDT, Matthias, 91052Erlangen (DE); TEICHMANN, Daniel, 80796 München (DE); WASSERSCHEID, Peter, 91054 Erlangen (DE); ARLT, Wolfgang, 90425 Nürnberg (DE)
(74) Vertreter: Rau, Schneck & Hübner Patentanwälte Rechtsanwälte PartGmbB
(86) Internationale Anmeldenummer: PCT/EP2014/074961
(87) Internationale Veröffentlichungsnummer: WO 2015/075044

(56) Entgegenhaltungen:
- DE-A1-102008 034 221
- DE-A1-102011 116 694
- DE-A1-102011 121 704
- US-A1- 2007 227 899
- BENJAMIN MÜLLER ET AL: "Energiespeicherung mittels Methan und energietragenden Stoffen - ein thermodynamischer Vergleich", CHEMIE INGENIEUR TECHNIK, Bd. 83, Nr. 11, 11. Oktober 2011 (2011-10-11), Seiten 2002-2013, XP055161833, ISSN: 0009-286X, DOI: 10.1002/cite.201100113
- DANIEL TEICHMANN ET AL: "Liquid Organic Hydrogen Carriers as an efficient vector for the transport and storage of renewable energy", INTERNATIONAL JOURNAL OF HYDROGEN ENERGY, Bd. 37, Nr. 23, 27. September 2012 (2012-09-27), Seiten 18118-18132, XP055097540, ISSN: 0360-3199, DOI: 10.1016/j.ijhydene.2012.08.066
- DANIEL TEICHMANN ET AL: "Energy storage in residential and commercial buildings via Liquid Organic Hydrogen Carriers (LOHC)", ENERGY & ENVIRONMENTAL SCIENCE, Bd. 5, Nr. 10, 8. August 2012 (2012-08-08) , Seite 9044, XP055097541, ISSN: 1754-5692, DOI: 10.1039/c2ee22070a

## Beschreibung

Die Erfindung betrifft eine Anlage sowie ein Verfahren zum Speichern und zum Freisetzen von Energie.

Aus dem Stand der Technik sind Stromerzeugungs-Einheiten bekannt, die elektrischen Strom aus regenerativen Energieformen erzeugen. Insbesondere dienen hierfür Photovoltaik-Anlagen, Windkraftwerke und/oder Wasserkraftwerke. Die Verfügbarkeit regenerativer Energien ist von meteorologischen Einflüssen abhängig und insbesondere nicht beeinflussbar und schwer vorhersagbar. Die Erzeugung von elektrischem Strom aus regenerativen Energien ist unstet. Anlagen zum Speichern von Energie sind aus DE 10 2011 121 704 A1, aus DE 10 2011 116 694 A1, aus US 2007/0227899 A1, aus Benjamin Müller et al., Chemieingenieurtechnik, Bd. 83, Nr. 11, S. 2002 bis 2013, aus Daniel Teichmann et al., International Journal of Hydrogen Energy, Bd. 37, Nr. 23, S. 18118 bis 18132, und aus Daniel Teichmann et al., Energy and Environmental Science, Bd. 5, Nr. 10, S. 9044 bis 9054 bekannt.

Der vorliegenden Erfindung liegt die Aufgabe zugrunde, die Verfügbarkeit von elektrischem Strom, der insbesondere aus regenerativen Energieformen erzeugt worden ist, zu verbessern.

Die Aufgabe wird durch die Merkmale der Ansprüche 1 und 11 gelöst. Der Kern der Erfindung besteht darin, dass eine Anlage zum Speichern von Energie eine Wasserstoffspeicherungs-Vorrichtung zum Speichern von Wasserstoff und eine Wärmespeicherungs-Einheit zum Spei-chern von Wärme aufweist. Die Wasserstoffspeicherungs-Vorrichtung ermöglicht das Speichern von Wasserstoff, der in einer Wasserstofferzeugungs-Einheit erzeugt worden ist. Es ist eine Belade-Einheit zum Beladen eines entladenen Trägermediums mit dem Wasserstoff vorgesehen. Der Wasserstoff kann vorteilhafterweise gemeinsam mit dem Trägermedium gehandhabt, also transportiert, gefördert und insbesondere gespeichert werden. Die vorteilhafte Handhabung des Wasserstoffs gemeinsam mit dem Trägermedium ist insbesondere dadurch ermöglicht, dass der Wasserstoff an dem Trägermedium gebunden und insbesondere chemisch gebunden ist. Insbesondere ist es nicht erforderlich, dass molekularer Wasserstoff gehandhabt werden muss. Die Handhabung molekularen Wasserstoffs ist kompliziert und stellt ein Sicherheitsrisiko dar. Um eine sicherheitsrelevante Handhabung molekularen Wasserstoffs zu ermöglichen, ist ein hoher apparativer Aufwand erforderlich. Die Handhabung molekularen Wasserstoffs ist kostenintensiv. Mit einer Entlade-Einheit wird der Wasserstoff von dem beladenen Trägermedium wieder entladen. Der Entladevorgang in der Entlade-Einheit ermöglicht die Freisetzung des Wasserstoffs von dem beladenen Trägermedium. Es ist Wärme erforderlich, um die Freisetzung anzutreiben und/oder zu unterstützen. Dazu ist die Wärmespeicherungs-Einheit, insbesondere direkt und unmittelbar, mit der Entlade-Einheit verbunden. Die für das Entladen des Wasserstoffs erforderliche Wärme kann unkompliziert und verlustreduziert, insbesondere verlustfrei, bereitgestellt werden. Insbesondere ist es nicht erforderlich, dass Wasserstoff, der in der Wasserstoffspeicherungs-Vorrichtung gespeichert ist, dazu verwendet werden muss, um die benötigte Wärme für das Entladen des Wasserstoffs aufzubringen. Beispielsweise dann, wenn der freigesetzte Wasserstoff, insbesondere in einer Polymerelektrolytmembran-Brennstoffzelle energetisch verwertet wird, weist die dadurch gebildete Wärme ein Temperaturniveau auf, das zu gering ist, um eine Freisetzung des Wasserstoffs aus der Wasserstoffspeicherungs-Vorrichtung zu ermöglichen. Bei einer energetischen Verwertung von freigesetztem Wasserstoff in einer Brennkammer können dagegen Wirkungsgradverluste daraus resultieren, dass die Auskopplung von Wärme auf einem hohen Temperaturniveau Effizienzverluste innerhalb der Brennkammer bewirkt. Überraschenderweise wurde nun gefunden, dass mit der zusätzlichen Wärmespeicherungs-Einheit die zum Freisetzen des Wasserstoffs erforderliche Wärme, insbesondere zum erforderlichen Zeitpunkt und insbesondere mit dem erforderlichen Temperaturniveau, bereitgestellt werden kann. Dadurch ist die Strom-zu-Strom-Effizienz der Anlage verbessert. Die in der Wärmespeicherungs-Einheit zumindest teilweise gespeicherte Wärme wird mittels einer Wärmeerzeugungs-Einheit erzeugt. Die Wärmeerzeugungs-Einheit ist eine separate Einheit und insbesondere separat von der Wasserstofferzeugungs-Einheit, der Wasserstoffspeicherungs-Vorrichtung und/oder der Wärmespeicherungs-Einheit ausgeführt. Die Wärmeerzeugungs-Einheit ist eine zusätzliche Einheit der Anlage. Die Wärmeerzeugungs-Einheit ermöglicht das Erzeugen von Wärme während eines energiereichen Zeitraums. Energiereich bedeutet, dass mehr Energie, insbesondere aus regenerativen Energieformen erzeugter elektrischer Strom, zur Verfügung steht, als verbraucht wird. Das bedeutet, es liegt ein Energie-Überschuss vor. Die überschüssige Energie kann als Wasserstoff mittels des Trägermediums in der Anlage gespeichert werden. Energiereich kann auch bedeuten, dass Energie zu niedrigen Kosten verfügbar ist. Dagegen ist ein energiearmer Zeitraum dadurch gekennzeichnet, dass Energie nicht in ausreichender Menge oder nur zu hohen Kosten zur Verfügung steht. Während des energiearmen Zeitraums wird Wärme von der Wärmespeicherungs-Einheit für das Entladen in der Entlade-Einheit bereitgestellt. Insbesondere wird Wärme während des energiereichen Zeitraums in der Wärmeerzeugungs-Einheit erzeugt und in der Wärmespeicherungs-Einheit gespeichert. Während des energiearmen Zeitraums wird die in der Wärmespeicherungs-Einheit gespeicherte Energie an die Entlade-Einheit abgegeben. Das bedeutet, es wird mehr Energie benötigt, als zur Verfügung steht. Während des energiereichen Zeitraums wird in der Wärmeerzeugungs-Einheit ein Wärmeträger erhitzt und der erhitzte Wärmeträger an die Wärmespeicherungs-Einheit überführt. Dadurch wird die Wärmespeicherungs-Einheit von einem thermisch entladenen in einen thermisch beladenen Zustand überführt. Insbesondere ist der Wärmeträger flüssig oder gasförmig. Es ist auch möglich, dass der Wärmeträger in der Wärmeerzeugungs-Einheit verdampft. Beispielsweise ist der Wärmeträger ein flüssiges organisches Wärmeträgeröl, eine Salzschmelze oder ein flüssiges Metall. Das Erhitzen des Wärmeträgers erfolgt insbesondere durch Nutzung regenerativer Energieformen und/oder durch elektrischen Strom.

Insbesondere ist es möglich, an einem ersten Ort und/oder zu einem ersten, insbesondere energiereichen, Zeitpunkt mittels einer ersten Teil-Anlage eine Wasserstoffbeladung und -speicherung zu ermöglichen. Diese erste Teil-Anlage umfasst insbesondere eine Wasserstofferzeugungs-Einheit zum Erzeugen von Wasserstoff und eine Belade-Einheit zum Beladen eines Trägermediums mit dem in der Wasserstofferzeugungs-Einheit erzeugten Wasserstoff. Insbesondere dient dazu LOHC-Trägermedium, das vorteilhaft gehandhabt, insbesondere gespeichert und/oder transportiert, werden kann. Eine zweite Teil-Anlage zum Freisetzen von Energie in Form von Wasserstoff umfasst eine Entlade-Einheit zum Entladen des Wasserstoffs von dem beladenen Trägermedium und eine Wärme-Vorrichtung zum Erzeugen und Speichern von Wärme, wobei die Wärme-Vorrichtung mit der Entlade-Einheit zum Bereitstellen von Wärme verbunden ist. Die zweite Teil-Anlage ist insbesondere räumlich beabstandet, also an einem zweiten, von dem ersten Ort entfernten Ort, angeordnet. Das Freisetzen von Wasserstoff erfolgt insbesondere während eines zweiten, insbesondere energiearmen Zeitraums. Insbesondere umfasst die zweite Teil-Anlage eine Wasserstoffoxidations-Einheit, um den freigesetzten Wasserstoff am zweiten Ort zu verstromen. Am zweiten Ort wird elektrische Energie zur Verfügung gestellt. Die zweite Teil-Anlage kann als eigenständige Anlage zum Freisetzen von Energie in Form von Wasserstoff, insbesondere unabhängig von der ersten Teil-Anlage, eingesetzt und betrieben werden. Aufgrund der guten Transport- und Speicher-Eigenschaften von mit Wasserstoff beladenem LOHC-Trägermedium kann Wasserstoff, der in der ersten Teilanlage erzeugt und an dem LOHC-Trägermedium chemisch gebunden worden ist, zu der zweiten Teil-Anlage an dem zweiten Ort transportiert werden. Der Transport kann in Tankfahrzeugen und/oder über ein dafür vorgesehenes Leitungssystem erfolgen. Insbesondere ist es nicht erforderlich, dass bei der ersten Teil-Anlage eine Wärmevorrichtung vorgesehen ist. Mittels der Wärme-Vorrichtung kann die zweite Teil-Anlage, also die Anlage zum Freisetzen von Energie in Form von Wasserstoff, vorteilhaft betrieben werden.

Vorteilhaft ist eine Anlage mit einer Stromerzeugungs-Einheit zum Erzeugen von elektrischem Strom. Die Stromerzeugungs-Einheit ist mit der Wasserstofferzeugungs-Einheit zur Bereitstellung von Strom für die Wasserstofferzeugung und/oder mit der Wärmeerzeugungs-Einheit zur Bereitstellung von Strom für die Wärmeerzeugung verbunden. Die Stromerzeugungs-Einheit ermöglicht die ausreichende Versorgung von elektrischem Strom für die Wasserstofferzeugungs-Einheit. Die Stromerzeugungs-Einheit kann eine separate, lokale Einheit sein, die die Erzeugung von elektrischem Strom in der Anlage ermöglicht. Es ist auch möglich, dass als Stromerzeugungs-Einheit eine lokal entfernt angeordnete Einheit vorgesehen ist, die beispielsweise über ein Stromleitungsnetz mit der Anlage verbunden ist. Insbesondere ist also auch ein öffentliches Stromleitungsnetz als Stromerzeugungs-Einheit im Sinne der Anmeldung zu verstehen. Überraschend wurde gefunden, dass auch dann, wenn der von der Stromerzeugungs-Einheit erzeugte elektrische Strom sowohl zur Wasserstofferzeugung als auch zur Wärmeerzeugung genutzt wird, indem der Wärmeträger elektrisch erhitzt wird, sich eine Verbesserung der Strom-zu-Strom-Effizienz von etwa 30 % ergibt.

Besonders vorteilhaft ist eine Anlage, bei der die Stromerzeugungs-Einheit das Erzeugen von elektrischem Strom aus regenerativen Energieformen ermöglicht. Insbesondere handelt es sich bei der Stromerzeugungs-Einheit um eine Photovoltaik-Einheit, ein Windkraftwerk und/oder ein Wasserkraftwerk.

Insbesondere ist es vorteilhaft, wenn die Wärmeerzeugungs-Einheit ein Aufheizen des Trägermediums aus regenerativer Energie, d. h. aus regenerativer Wärme wie beispielsweise Sonnenlicht, ermöglicht. In diesem Fall ergibt sich eine Verbesserung der Strom-zu-Strom-Effizienz von bis zu 80 %. Die Erhitzung des Wärmeträgers durch direkte Sonneneinstrahlung kann dadurch verbessert werden, dass die Sonneneinstrahlung mittels eines Kollektors gebündelt wird. Insbesondere kann der Wärmeträger - zumindest teilweise - auch durch elektrische Beheizung erhitzt werden, wobei der dafür erforderliche elektrische Strom durch die Stromerzeugungs-Einheit zur Verfügung gestellt werden kann. Die Wärmeerzeugungs-Einheit ist geeignet, den Wärmeträger auf einen Temperaturbereich zwischen 100°C und 1.500°C, insbesondere zwischen 150°C und 1.200°C und insbesondere zwischen 200°C und 800°C zu erhitzen. Die Wärmespeicherungs-Einheit ermöglicht die Aufnahme des erhitzten Wärmeträgers in dem energiereichen Zeitraum. Die Wärmespeicherungs-Einheit ermöglicht das Speichern der Wärme. Die Wärmespeicherungs-Einheit ermöglicht die Abgabe von Wärme über die Abgabe von erhitztem Wärmeträger in einem energiearmen Zeitraum, um die Freisetzung von Wasserstoff in der Entlade-Einheit anzutreiben oder zu unterstützten. In einem thermisch beladenen Zustand ermöglicht die Wärmespeicherungs-Einheit, insbesondere durch einen zusätzlichen Wärmetauscher, einen Wärmestrom in einem Temperaturbereich zwischen 50°C und 1.000°C, insbesondere zwischen 120°C und 600°C und insbesondere zwischen 280°C und 500°C zu erzeugen. In diesem Temperaturbereich kann die Freisetzung des Wasserstoffs in der Entlade-Einheit besonders bevorzugt angetrieben oder unterstützt werden. Insbesondere ist die Wärmespeicherungs-Einheit ein thermisch isoliertes Tanksystem. Das Tanksystem kann die Bevorratung des flüssigen organischen Wärmeträgeröls, der heißen Salzschmelze oder des flüssigen Metalls ermöglichen. Es ist auch möglich, dass die Wärmespeicherungs-Einheit als Latentwärme-Speichersystem ausgeführt ist, das Wärme durch Phasenwechsel des Wärmeträgers aufnehmen, speichern und wieder abgeben kann. Als Wärmespeicherungs-Einheit kann auch ein Feststoff mit geeigneter Wärmekapazität dienen. Ein derartiger Wärmespeicher ist beispielsweise ein Betonblock oder eine Sandschüttung. Insbesondere beträgt die Wärmekapazität geeigneter Feststoffe mindestens 0,4 kJ / (kg . K).

Als Wärmespeicherungs-Einheit kann auch eine thermochemische Speicher-Einheit dienen, bei der Wärme durch Freisetzung von Wasser gespeichert und Wärme bei Aufnahme von Wasser freigesetzt wird. In der Speicherungs-Einheit ist ein Feststoff mit hoher spezifischer Oberfläche vorgesehen, der eine hohe chemische Affinität zur Anlagerung von Wassermolekülen besitzt. Besonders bevorzugt ist eine derartige Wärmespeicherungs-Einheit mit einem oder mehreren porösen oxidischen Feststoffen ausgeführt, die insbesondere mit anorganischen Salzen modifiziert sein können. Besonders vorteilhaft ist eine bauliche und/oder konstruktive Kombination der Wärmeerzeugungs-Einheit und der Wärmespeicherungs-Einheit derart, dass die thermische Beladung, d. h. das Erhitzen des Wärmeträgers, durch direkte Sonneneinstrahlung der Wärmespeicherungs-Einheit erfolgen kann. Insbesondere ist die Wärmespeicherungs-Einheit also derart ausgeführt und in die Anlage zum Speichern von Energie eingebunden, dass von der Wärmeerzeugungs-Einheit erzeugte Wärme aufgenommen und zeitversetzt zumindest teilweise an die Entlade-Einheit abgegeben werden kann.

Besonders vorteilhaft ist eine Anlage mit einer Wasserstoffoxidations-Einheit zur Erzeugung von elektrischem Strom. Der elektrische Strom wird insbesondere durch die Oxidation von Wasserstoff mit Sauerstoff unter Bildung von Wasser ermöglicht. Mit der Wasserstoffoxidations-Einheit kann elektrischer Strom unmittelbar erzeugt werden, insbesondere wenn die Wasserstoffoxidations-Einheit eine PEM-Brennstoffzelle ist. In der PEM-Brennstoffzelle wird in einem Temperaturbereich zwischen -20°C und 250°C, insbesondere zwischen 20°C und 180°C aus Wasserstoff und Sauerstoff elektrischer Strom gewonnen. Alternativ kann auch eine SOFC (Solid Oxide Fuel Cell)-Brennstoffzelle als Wasserstoffoxidations-Einheit verwendet werden. In der SOFC-Brennstoffzelle erfolgt die Erzeugung von elektrischem Strom bei einer Temperatur zwischen 200°C und 1.200°C, insbesondere zwischen 400°C und 900°C aus Wasserstoff und Sauerstoff. Die Wasserstoffoxidations-Einheit kann auch zur mittelbaren Erzeugung von elektrischem Strom dienen, beispielsweise wenn die Wasserstoffoxidations-Einheit eine Brennkammer ist. Heiße Verbrennungsgase der Brennkammer können zum Antreiben einer Turbine verwendet werden, um elektrische Energie zu erzeugen.

Vorteilhaft ist eine Anlage, bei der die Entlade-Einheit zur Förderung von entladenem Trägermedium mit der Belade-Einheit derart verbunden ist, dass aus der Entlade-Einheit abgegebenes entladenes Trägermedium zu der Belade-Einheit zum Beladen mit Wasserstoff gefördert werden kann. Insbesondere weist die Wasserstoffspeicherungs-Vorrichtung ein geschlossenes Kreislaufsystem für das Trägermedium auf. Insbesondere kann zwischen der Entlade-Einheit und der Belade-Einheit eine Trägermediumzwischenspeicherungs-Einheit zum Speichern des entladenen Trägermediums vorgesehen sein. Insbesondere kann zwischen der Belade-Einheit und der Entlade-Einheit eine Trägermediumspeicherungs-Einheit zum Speichern des beladenen Trägermediums vorgesehen sein. Das gespeicherte beladene Trägermedium ist ein Energiespeicher. Bei Bedarf kann das beladene Trägermedium freigegeben werden. Der gebundene Wasserstoff wird freigesetzt und in einer Wasserstoff-Oxidationseinheit verstromt. Es ergibt sich eine verbesserte Pufferwirkung der Wasserstoffspeicherungs-Vorrichtung.

Vorteilhaft ist eine Anlage, bei der die Wasserstofferzeugungs-Einheit ein Elektrolyseur ist, der die Zerlegung von Wasser in Wasserstoff und Sauerstoff ermöglicht. Der im Elektrolyseur gebildete Wasserstoff wird zumindest teilweise der Belade-Einheit zugeführt, um das Trägermedium zu beladen. Der im Elektrolyseur ebenfalls gebildete Sauerstoff wird an einen Sauerstoffverbraucher abgegeben, der insbesondere außerhalb der Anlage angeordnet ist. Es ist auch möglich, den Sauerstoff direkt an die Umgebung abzugeben. Besonders bevorzugt ist die Ausführung des Elektrolyseurs als Hochtemperatur-Elektrolyseur oder als SOEC (Solid Oxide Electrolysis Cell)-Elektrolyseur. Der SOEC-Elektrolyseur ist insbesondere direkt mit der Wärmespeicherungs-Einheit verbunden. Die Wärmespeicherungs-Einheit ist derart ausgeführt, dass bei der thermischen Beladung, also beim Zuführen von erhitztem Wärmeträger, Wasserdampf freigesetzt wird. Dieser Wasserdampf wird dem SOEC-Elektrolyseur direkt zugeleitet. Dadurch kann Wasser sehr effizient für den SOEC-Elektrolyseur bereitgestellt werden. Das für den SOEC-Elektrolyseur bereitgestellte Wasser weist eine verbesserte Reinheit auf, da das Wasser dem SOEC-Elektrolyseur in gasförmigem Zustand als Wasserdampf zugeführt wird. Durch den Verdampfungsschritt finden eine Entsalzung des Wassers und damit eine systemimmanente Reinigung statt. Bei der thermischen Entladung der Wärmespeicherungs-Einheit kann die Wärmespeicherungs-Einheit Wasserdampf aufnehmen, der insbesondere von der Wasserstoffoxidations-Einheit abgegeben wird. Das bedeutet, dass die Wärmespeicherungs-Einheit gleichzeitig als Wasserspeicherungs-Einheit dient. In einem energiearmen Zeitraum wird Wasser aus der Wasserstoffoxidations-Einheit unter Wärmefreisetzung gebunden. Dieses Wasser wird während eines energiereichen Zeitraums unter Wärmeaufnahme durch thermische Beladung der Wärmespeicherungs-Einheit in dampfförmigem Zustand überführt und für die Elektrolyse im SOEC-Elektrolyseur bereitgestellt.

Vorteilhaft ist eine Anlage, bei der in der Belade-Einheit der Wasserstoff an das Trägermedium gebunden wird. Insbesondere ist Wasserstoff an dem Trägermedium chemisch gebunden oder physisorptiv gebunden. Eine chemische Bindung des Wasserstoffs kann beispielsweise dadurch erfolgen, dass das in der Belade-Einheit vorhandene Trägermedium ein Metallhydridspeicher ist, der ein aus einer Metalllegierung hergestelltes Material enthält, das Wasserstoff aufnimmt und chemisch bindet. Alternativ kann das Trägermedium auch ein flüssiges organisches Hydrid sein. In diesem Fall erfolgt die chemische Bindung des Wasserstoffs in der Belade-Einheit durch eine katalytische Hydrierreaktion an ein organisches Molekül oder an eine Mischung organischer Moleküle. Derartige organische Hydride, die in der englischen Literatur als liquid organic hydrogen carrier (LOHC) bezeichnet werden, sind aus der EP 1 475 349 A2 bekannt. Diese Form der Wasserstoffspeicherung hat den besonderen Vorteil, dass LOHC-Trägermedien unter den verwendeten Prozessbedingungen in flüssiger Form vorliegen. Die physikochemischen Eigenschaften der LOHC-Trägermedien haben hohe Ähnlichkeit zu herkömmlichen flüssigen Kraftstoffen, sodass Pumpen zum Transport und Behälter zur Lagerung aus dem Bereich der Kraftstoff- und Brennstofflogistik genutzt werden können. Die Wasserstoffspeicherung in chemisch gebundener Form in einer organischen Flüssigkeit erlaubt eine drucklose Lagerung bei Normalbedingungen über große Zeiträume ohne signifikanten Wasserstoffverlust. Als LOHC-Trägermedien werden insbesondere polyzyklische, aromatische Verbindungen mit einem π-Elektronensystem oder mehreren π-Elektronensystemen, die in der Belade-Einheit der Wasserstoffspeicherungs-Vorrichtung durch Hydrierung in die jeweiligen gesättigten, polyzyklischen Verbindungen überführt werden. Als LOHC-Trägermedien können insbesondere Dibenzyltoluole und Benzyltoluole als Reinstoffe, isomere Gemische oder Mischungen dieser Substanzen miteinander verwendet werden. Es ist auch möglich, als LOHC-Trägermedien polyzyklische, heteroaromatische Verbindungen mit einem π-Elektronensystem oder mehreren π-Elektronensystemen zu verwenden, die in der Belade-Einheit durch Hydrierung in die jeweiligen gesättigten, polyzyklischen Verbindungen überführt werden, die Heteroatome wie Stickstoff oder Sauerstoff enthalten. Insbesondere dienen als LOHC-Trägermedien N-Ethylcarbazol, N-Propylcarbazol, N-Isopropylcarbazol, N-Butylcarbazol oder Mischungen dieser Substanzen miteinander. Als LOHC-Trägermedien sind organische Oligomere oder Polymere mit ausgedehnten π-konjugierten Elektronensystemen, die in der Belade-Einheit durch Hydrierung in die jeweiligen gesättigten Verbindungen überführt werden, möglich. Bei der Verwendung von flüssigen organischen Hydriden erfolgt die zumindest teilweise Hydrierung des entladenen LOHC-Trägermediums in einem druckstabilen chemischen Reaktor als Belade-Einheit bei einer Temperatur zwischen 50°C und 400°C, insbesondere zwischen 120°C und 300°C, insbesondere zwischen 150°C und 280°C. Die Hydrierung, also das Beladen, findet bei einem Verfahrensdruck von 2 bar bis 200 bar, insbesondere bei 10 bar bis 100 bar und insbesondere in Gegenwart eines metallhaltigen Katalysators statt. Als Katalysatoren für die Beladung des LOHC-Trägermediums eignen sich insbesondere solche, die das Element Ruthenium und/oder Nickel aufweisen. Es sind auch Katalysatoren möglich, die andere Elemente oder zusätzliche Elemente neben Ruthenium und/oder Nickel aufweisen. Wesentlich sind solche Elemente, die Wasserstoff anlagern und auf LOHC-Trägermedium übertragen können. Neben Ruthenium und/oder Nickel sind insbesondere Metalle wie Chrom, Eisen, Kobalt, Kupfer, Iridium, Palladium oder Platin als Katalysatoren möglich.

Vorteilhaft ist eine Anlage, bei der die Trägermediumspeicherungs-Einheit in die Belade-Einheit integriert ist. Dies ist vor allem dann der Fall, wenn das Trägermedium als Feststoff vorliegt. Alternativ kann die Trägermediumspeicherungs-Einheit einen separaten, insbesondere externen Tank aufweisen, der insbesondere mindestens eine Tankleitung zum Verbinden mit einem externen Leitungssystem aufweist. Dies ist besonders dann vorteilhaft, wenn das Trägermedium als Flüssigkeit oder Gas vorliegt. Dadurch ist es möglich, das Trägermedium weitgehend drucklos aufzubewahren. Beispielsweise kann ein Behälter, wie er zur Speicherung flüssiger Kohlenwasserstoffe wie Kraftstoffe und/oder Heizöl bekannt ist, genutzt werden. Es ist auch denkbar, dass das Trägermedium in ein dafür vorgesehenes Leitungssystem oder Transportsystem abgegeben und an einem anderen Ort zur Entladung bereitgestellt werden kann.

In der Entlade-Einheit wird zumindest teilweise Wärme der Wärmespeicherungs-Einheit zur Freisetzung von Wasserstoff genutzt. Der freigesetzte Wasserstoff wird an die Wasserstoffoxidations-Einheit abgegeben, um elektrischen Strom zu erzeugen. Sofern das Trägermedium ein Feststoff ist, ist die Entlade-Einheit derart ausgeführt, dass Wasserstoff von einem aus spezifischen Metalllegierungen hergestellten Material abgegeben und freigesetzt werden kann. Sofern es sich um ein sorptives Trägermedium handelt, ermöglicht die Entlade-Einheit das Desorbieren von Wasserstoff von einem porösen Feststoff, um Wasserstoff freizusetzen. Sofern ein LOHC-Trägermedium verwendet wird, wird der Wasserstoff durch eine katalysierte Dehydrierreaktion aus einem organischen Molekül oder aus einer Mischung organischer Moleküle freigesetzt. Das bedeutet, dass die Freisetzung des Wasserstoffs durch eine stoffliche Umwandlung des beladenen Trägermediums durch Entladung in der Entlade-Einheit mittels katalysierter Dehydrierreaktion erfolgt. Im beladenen Zustand ist das Trägermedium insbesondere eine gesättigte, polyzyklische Verbindung, insbesondere ein Perhydro-Dibenzyltoluol oder ein Perhydro-Benzyltoluol, die als Reinstoffe, isomere Gemische oder Mischungen untereinander verwendet werden können. Alternativ ist das beladene Trägermedium eine gesättigte, polyzyklische Verbindung, die Heteroatome wie Stickstoff oder Sauerstoff enthalten, insbesondere Perhydro-N-Ethylcarbazol, Perhydro-N-Propylcarbazol, Perhydro-N-Isopropylcarbazol, Perhydro-N-Butylcarbazol oder Mischungen dieser Substanzen. Alternativ können als beladenes Trägermedium auch ein gesättigtes organisches Oligomer oder Polymer verwendet werden, die sich durch katalytische Dehydrierung in Oligomere oder Polymere mit ausgedehntem π-konjugierten Elektronensystem umsetzen lassen. Das Entladen der beladenen Trägermedien in der Entlade-Einheit erfolgt insbesondere in einem druckstabilen chemischen Reaktor bei einer Prozesstemperatur zwischen 100° C und 450° C, bevorzugt zwischen 150° C und 420°C und insbesondere zwischen 180° C und 390° C. Der Prozessdruck liegt zwischen 0,1 und 30 bar, insbesondere zwischen 1 und 10 bar, wobei insbesondere ein metallhaltiger Katalysator eingesetzt werden kann, der insbesondere Platin und/oder Palladium enthält. Wesentlich ist, dass der Katalysator geeignet ist, Wasserstoff, der vom LOHC-Trägermedium abgegeben wird, als Wasserstoffgas freizusetzen. Neben Platin und/oder Palladium sind dafür insbesondere Metalle wie Chrom, Eisen, Kobalt, Nickel, Kupfer, Iridium oder Ruthenium, geeignet. Das entladene, flüssige Trägermedium kann von der Entlade-Einheit insbesondere in eine Trägermediumzwischenspeicherungs-Einheit abgeführt werden, die insbesondere extern zur Anlage angeordnet sein kann. Das zwischengespeicherte, entladene Trägermedium kann insbesondere zu einem späteren Zeitpunkt für eine erneute Beladung durch Wasserstoff, also für eine Wasserstoffspeicherung in der Anlage, insbesondere in der Wasserstoffspeicherungs-Vorrichtung, genutzt werden. Weiterhin kann eine Trägermediumspeicherungs-Einheit zum Speichern des beladenen Trägermediums vorgesehen sein. Sofern als Trägermedium ein Metallhydridspeicher verwendet wird, ist der für die Bereitstellung von Belade-Einheit, Trägermediumspeicherungs-Einheit und Entlade-Einheit erforderliche Bauraum komprimiert. Insbesondere sind die drei genannten Einheiten in einer Komponente baulich zusammengefasst. Die Beladung in der Belade-Einheit mit dem festen Trägermedium erfolgt gegenüber der Entladung in der Entlade-Einheit bei reduzierter Temperatur, aber höherem Druck.

Vorteilhaft ist eine Anlage mit einer Regelungs-Einheit, die zumindest mit der Wärmespeicherungs-Einheit und der Entlade-Einheit in bidirektionaler Signalverbindung steht. Dadurch ist es möglich, mit der Regelungs-Einheit den jeweiligen Zustand der Wärmespeicherungs-Einheit und der Entlade-Einheit zu erfassen. Das bedeutet, dass es über die Regelungs-Einheit möglich ist, zu erfassen, wie viel Wärme in der Wärmespeicherungs-Einheit zur Verfügung steht. Gleichzeitig kann ermittelt werden, ob ein Wärmebedarf in der Entlade-Einheit besteht. Die Regelungs-Einheit kann direkt die Wärmezufuhr von der Wärmespeicherungs-Einheit zu der Entlade-Einheit steuern, damit ein Entlade-Vorgang in der Entlade-Einheit ermöglicht bzw. gefördert wird. Zusätzlich kann die Regelungs-Einheit die Wärmeerzeugung in der Wärmeerzeugungs-Einheit veranlassen, sofern ein prognostizierter Wärmebedarf in der Entlade-Einheit einen Wärmevorrat in der Wärmespeicherungs-Einheit übertrifft. Damit ist sichergestellt, dass ein Entlade-Vorgang in der Entlade-Einheit infolge ausreichender Wärmezufuhr durchgängig betrieben werden kann.

Zur Überwachung des Gesamtprozesses und/oder der Gesamtanlage zur Energiespeicherung kann die Regelungseinheit mit weiteren Komponenten der Anlage, insbesondere mit der Stromerzeugungs-Einheit, der Wasserstofferzeugungs-Einheit, der Belade-Einheit, Trägermediumspeicherungs-Einheit und/oder Wasserstoffoxidations-Einheit verbunden sein.

Das erfindungsgemäße Verfahren zum Speichern von Energie zeichnet sich vor allem dadurch aus, dass Wärme mittels der Wärmespeicherungs-Einheit in der Entlade-Einheit bereitgestellt wird, wobei die Wärme für das Entladen einer Wasserstoffspeicherungs-Einheit und das Freisetzen von Wasserstoff aus dieser Wasserstoffspeicherungs-Einheit erforderlich ist. Das Verfahren umfasst weiterhin die Verfahrensschritte: Erzeugen von Wasserstoff mittels einer Wasserstofferzeugungs-Einheit, Beladen eines Trägermediums mit dem in der Wasserstofferzeugungs-Einheit erzeugten Wasserstoff mittels einer Belade-Einheit, Speichern des beladenen Trägermediums mittels einer Trägermediumspeicherungs-Einheit, Erzeugen von Wärme mittels einer Wärmeerzeugungs-Einheit, Speichern von mittels der Wärmeerzeugungs-Einheit erzeugter Wärme mittels einer Wärmespeicherungs-Einheit und Entladen des Wasserstoffs von dem beladenen Trägermedium mittels einer Entlade-Einheit. Der entladene Wasserstoff wird insbesondere einer Wasserstoffoxidations-Einheit zur Erzeugung von elektrischem Strom zugeführt. Alternativ kann der Wasserstoff verdichtet und in einen Wasserstoffdrucktank überführt, zu einem späteren Zeitpunkt genutzt und/oder in dieser Lagerform an einen anderen Ort transportiert werden. In dieser gebundenen Form kann der an dem beladenen Trägermedium gespeicherte Wasserstoff beispielsweise an einer Wasserstoff-Tankstelle zur Verfügung gestellt werden. Dazu wird der Wasserstoff von dem beladenen Trägermedium unter Wärmezufuhr freigesetzt und zur Vertankung bereitgestellt.

Vorteilhaft ist ein Verfahren, bei dem das Erzeugen von Wärme während eines energiereichen Zeitraums erfolgt, wobei zum Erzeugen der Wärme Energie, insbesondere in Form von elektrischem Strom und/oder als regenerative Energie, benutzt wird. Das Erzeugen von Wärme zu einem energiereichen Zeitraum ist unkompliziert und kostengünstig möglich.

Besonders vorteilhaft ist das Erzeugen von Wärme zum Erhitzen eines flüssigen oder gasförmigen Wärmeträgers. In dieser Form ist das erhitzte Trägermedium besonders vorteilhaft handhabbar.

Besonders vorteilhaft ist ein Verfahren, bei dem das Entladen des Wasserstoffs von dem beladenen Trägermedium während eines energiearmen Zeitraums erfolgt, wobei Wärme, die für das Entladen des Wasserstoffs erforderlich ist, als zuvor erzeugte und zwischenzeitlich gespeicherte Wärme zur Verfügung gestellt werden kann. Es ist also insbesondere nicht erforderlich, dass zur energiearmen Zeit Wärme separat erzeugt werden muss. Daraus ergeben sich Effizienz- und Kostenvorteile.

Besonders vorteilhaft ist ein Verfahren, das ein Regeln der Wärmezufuhr von der Wärmespeicherungs-Einheit zu der Entlade-Einheit aufgrund eines aktuellen thermischen Beladungszustands der Wärmespeicherungs-Einheit und/oder eines aktuellen Entlade-Zustands in der Entlade-Einheit ermöglicht.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine schematische Darstellung der erfindungsgemäßen Anlage zum Speichern von Energie gemäß einem ersten Ausführungsbeispiel und
- Fig. 2: eine Fig. 1 entsprechende Darstellung einer Anlage zum Speichern von Energie gemäß einem zweiten Ausführungsbeispiel.

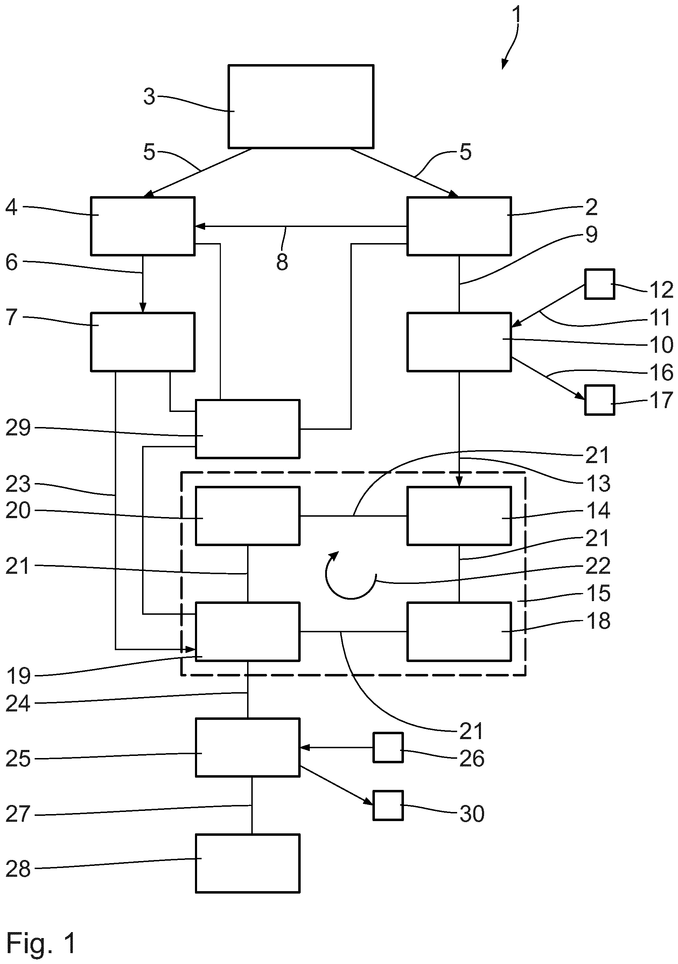

Die in Fig. 1 schematisch dargestellte und als Ganzes mit 1 bezeichnete Anlage zum Speichern von Energie umfasst eine Stromerzeugungs-Einheit 2 in Form einer Photovoltaik-Anlage. Die Stromerzeugungs-Einheit 2 ist geeignet, um Energie, die von regenerativen Energiequellen 3 bereitgestellt wird, zum Erzeugen von elektrischem Strom zu nutzen. Die Energiequellen 3 stellen regenerative, insbesondere unstete Energieformen dar. Als Stromerzeugungs-Einheit 2 kommen neben der genannten Photovoltaik-Einheit insbesondere ein Windkraftwerk und/oder ein Wasserkraftwerk in Betracht.

Die unmittelbare Energieeinwirkung von der regenerativen Energiequelle 3 auf die Stromerzeugungs-Einheit 2 und eine Wärmeerzeugungs-Einheit 4 ist durch die Pfeile 5 symbolisch dargestellt. Die Wärmeerzeugungs-Einheit 4 weist einen flüssigen Wärmeträger auf, der durch die Energieeinwirkung 5, insbesondere durch direkte Sonneneinstrahlung, aufgeheizt wird. Die Wärmeerzeugungs-Einheit 4 ist über eine Leitung 6 mit einer Wärmespeicherungs-Einheit 7 verbunden. Die Leitung 6 ist geeignet, um den Wärmeträger zu fördern. Insbesondere ist die Leitung 6 als sogenanntes Wärmerohr, das englischsprachig auch als heat pipe bekannt ist, ausgeführt. Ein derartiges Wärmerohr ist ein Wärmeübertrager, wobei durch Nutzung von Verdampfungswärme des Wärmeträgers eine hohe Wärmestromdichte möglich ist. Das bedeutet, dass bei kleiner Querschnittsfläche der Leitung 6 große Wärmemengen von der Wärmeerzeugungs-Einheit 4 zu der Wärmespeicherungs-Einheit 7 transportiert werden können. Dadurch ist ein effektiver und verlustreduzierter Wärmetransport möglich.

Die Wärmespeicherungs-Einheit ist insbesondere als Salzspeicher ausgeführt, der beispielsweise auf eine Temperatur von etwa 500°C erhitzt werden kann.

Die Stromerzeugungs-Einheit 2 ist mit der Wärmeerzeugungs-Einheit 4 über ein Stromkabel 8 verbunden. Dadurch ist es möglich, dass von der Stromerzeugungs-Einheit 2 zu der Wärmeerzeugungs-Einheit 4 Energie in Form von elektrischem Strom zugeführt werden kann.

Eine weitere Stromleitung 9 ist vorgesehen, um die Stromerzeugungs-Einheit 2 mit einer Wasserstofferzeugungs-Einheit 10 zu verbinden. Die Wasserstofferzeugungs-Einheit ist als Elektrolyseur ausgeführt. Der Elektrolyseur 10 ist über eine Rohrleitung 11 mit einem Wasserspeicher 12 verbunden. Der Wasserspeicher 12 kann ein Speicherbehälter oder ein Anschluss an eine öffentliche Wasserversorgung darstellen. Über die Rohrleitung 11 kann Wasser aus dem Wasserspeicher 12 der Wasserstofferzeugungs-Einheit 10 zugeführt werden. Wasserstoff, der gasförmig als H₂ in der Wasserstofferzeugungs-Einheit 10 erzeugt wird, kann über eine Rohrleitung 13 einer Belade-Einheit 14 einer Wasserstoffspeicherungs-Vorrichtung 15 zugeführt werden. Weiterhin ist an die Wasserstofferzeugungs-Einheit 10 eine Rohrleitung 16 angeschlossen zur Verbindung mit einem Sauerstoff-Verbraucher 17. Es ist auch möglich, dass der Sauerstoff-Verbraucher 17 nicht vorgesehen ist und Sauerstoff über die Rohrleitung 16 direkt an die Umgebung abgegeben wird.

Die Wasserstoffspeicherungs-Vorrichtung 15 dient zum Speichern von Wasserstoff und umfasst die Belade-Einheit 14 zum Beladen eines Trägermediums mit dem Wasserstoff, der in der Wasserstofferzeugungs-Einheit 10 erzeugt worden ist. Als Trägermedium dient gemäß dem gezeigten Ausführungsbeispiel ein flüssiges Trägermedium umfassend das System Dibenzyltoluol/Perhydro-Dibenzyltoluol, wie es von Brückner und Mitarbeiter, ChemSusChem, 2013, DOI: 10.1002/cssc.201300426 offenbart. Die Wasserstoffspeicherungs-Vorrichtung 15 umfasst ferner eine Trägermediumspeicherungs-Einheit 18 zum Speichern des in der Belade-Einheit beladenen Trägermediums. Die Wasserstoffspeicherungs-Vorrichtung 15 umfasst ferner eine Entlade-Einheit 19 zum Entladen des Wasserstoffs von dem beladenen Trägermedium sowie eine Trägermediumzwischenspeicherungs-Einheit 20 zum Speichern des entladenen Trägermediums. Die Belade-Einheit 14, die Trägermediumspeicherungs-Einheit 18, die Entlade-Einheit 19 und die Trägermediumzwischenspeicherungs-Einheit 20 sind jeweils über Rohrleitungen 21 miteinander verbunden. Dabei kann es sich um gewöhnliche Rohrleitungen handeln, wie sie auch zum Fördern von Dieselkraftstoff oder Heizöl verwendet werden können. Durch die Rohrleitungen 21 kann das Trägermedium entlang einer Kreislaufrichtung 22 in der Wasserstoffspeicherungs-Vorrichtung zirkulieren.

Die Entlade-Einheit 19 ist mit der Wärmespeicherungs-Einheit 7 über eine Rohrleitung 23 verbunden. Durch die Rohrleitung 23 kann erhitzter Wärmeträger, also Wärme, von der Wärmespeicherungs-Einheit 7 direkt an die Entlade-Einheit 19 überführt werden. Die Entlade-Einheit 19 ist über eine Rohrleitung 24 mit einer Wasserstoffoxidations-Einheit 25 verbunden. Gemäß dem gezeigten Ausführungsbeispiel ist die Wasserstoffoxidations-Einheit als PEM-Brennstoffzelle ausgeführt. Die Wasserstoffoxidations-Einheit 25 ist mit einer Sauerstoffquelle und/oder mit einer Luftquelle 26 verbunden. Weiterhin ist die Wasserstoffoxidations-Einheit 25 über eine Stromleitung 27 an ein Stromnetz 28 angeschlossen. Anstelle des Stromnetzes 28 kann auch ein einzelner Strom-Verbraucher vorgesehen sein. Das Stromnetz 28 dient zur Versorgung mehrerer, insbesondere einer Vielzahl von bis zu 1.000 oder 10.000 oder mehr einzelnen Strom-Verbrauchern. Das Stromnetz kann beispielsweise ein lokales Stromnetz sein, das zur Stromversorgung eines Gewerbegebiets mit einem oder mehreren Industrieunternehmen und/oder einem oder mehreren Privathaushalten dient. Das Stromnetz 28 kann auch Teil des öffentlichen Stromnetzes sein. Dadurch ist es möglich, dass elektrischer Strom, der in der Wasserstoffoxidations-Einheit 25 erzeugt worden ist, über die Stromleitung 27 und das Stromnetz 28 eingespeist wird.

Die Anlage 1 umfasst weiterhin eine Regelungs-Einheit zum geregelten Betreiben der Anlage 1. Die Regelungs-Einheit 29 ist insbesondere mit der Wärmespeicherungs-Einheit 7 und mit der Entlade-Einheit 19 jeweils in bidirektionaler Signalverbindung. Dadurch ist es möglich, dass die Regelungs-Einheit den thermischen Beladungszustand der Wärmespeicherungs-Einheit 7 einerseits und die aktuellen Prozessparameter in der Entlade-Einheit 19 andererseits erfasst. Die Regelungs-Einheit garantiert somit, dass beispielsweise dann, wenn eine Entladung stattfinden soll, Wärme von der Wärmespeicherungs-Einheit 7 über die Rohrleitung 23 der Entlade-Einheit 19 bereitgestellt wird. Für den Fall, dass ein Wärmebedarf zur Entladung besteht, und ein thermischer Beladungszustand in der Wärmespeicherungs-Einheit 7 nicht ausreichend sein sollte, so kann über die Regelungs-Einheit 29 auch ein weiteres thermisches Beladen initiiert werden, indem beispielsweise die Stromerzeugungs-Einheit 2 über die Stromleitung 8 elektrischen Strom zum elektrischen Beheizen des Wärmeträgers in der Wärmeerzeugungs-Einheit 4 ermöglicht. Dazu ist die Regelungs-Einheit 29 in bidirektionaler Signalverbindung auch mit der Wärmeerzeugungs-Einheit 4 und mit der Stromerzeugungs-Einheit 2.

Nachfolgend wird das erfindungsgemäße Verfahren zum Speichern von Energie anhand der Funktionsweise der Anlage 1 näher erläutert. Die Sonne als regenerative Energiequelle 3 sendet Sonnenstrahlen aus, die als Energieeinwirkung 5 mittels einer Photovoltaik-Anlage als Stromerzeugungs-Einheit 2 zur Stromerzeugung genutzt werden können. Gleichzeitig können die Sonnenstrahlen als Energieeinwirkung 5 auch zum Aufheizen eines, insbesondere flüssigen, Wärmeträgers in der Wärmeerzeugungs-Einheit 4, genutzt werden. Sofern die Energieeinwirkung 5 durch Sonneneinstrahlung nicht ausreichend sein sollte oder nicht in einem dafür vorgesehenen Zeitraum zu einer gewünschten Aufheizung des Wärmeträgers führt, kann zusätzlich elektrischer Strom über die Stromleitung 8 von der Stromerzeugungs-Einheit 2 der Wärmeerzeugungs-Einheit 4 zugeführt werden. Das Aufheizen des Wärmeträgers, das auch als thermisches Beladen bezeichnet wird, erfolgt also durch Energieeinwirkung 5 durch regenerative Energien und/oder durch elektrischen Strom, der insbesondere aus regenerativer Energie erzeugt worden ist.

Der erhitzte Wärmeträger wird über die Leitung 6, bei der es sich insbesondere um eine Rohrleitung handelt, zu der Wärmespeicherungs-Einheit 7 gefördert und dort gespeichert. Der in der Stromerzeugungs-Einheit 2 erzeugte elektrische Strom wird über die Stromleitung 9 der Wasserstofferzeugungs-Einheit 10 zugeführt. Weiterhin werden der Wasserstofferzeugungs-Einheit 10 Wasser aus dem Wasserspeicher 12 über die Rohrleitung 11 zugeführt. Durch Elektrolyse wird das Wasser in der Wasserstofferzeugungs-Einheit 10 in Wasserstoff und Sauerstoff aufgetrennt. Der Sauerstoff wird über die Rohrleitung 16 an den Sauerstoff-Verbraucher 17 abgegeben. Der Wasserstoff wird über die Rohrleitung 13 der Belade-Einheit 14 der Wasserstoffspeicherungs-Vorrichtung 15 zugeführt. In der Belade-Einheit 14 ist entladenes Trägermedium in Form von Dibenzyltoluol vorgesehen. Durch die Zuführung des Wasserstoffs erfolgt eine Hydrierung zu Perhydro-Dibenzyltoluol. Das Trägermedium befindet sich nun in einem beladenen Zustand. Das beladene Trägermedium wird von der Belade-Einheit 14 über die Rohrleitung 21 zu der Trägermediumspeicherungs-Einheit 18 gefördert und kann dort bei Bedarf gespeichert werden. Das Beladene Trägermedium wird von der Trägermediumspeicherungs-Einheit 18 über die Rohrleitung 21 zu der Entlade-Einheit 19 gefördert. In der Entlade-Einheit 19 findet das Entladen des Perhydro-Dibenzyltoluols statt, indem Wasserstoff von dem Trägermedium freigesetzt wird. Für das Freisetzen des Wasserstoffs ist Wärme erforderlich, die der Entlade-Einheit 19 von der Wärmespeicherungs-Einheit 7 über die Rohrleitung 23 zugeführt wird. Das in der Entlade-Einheit entladene Trägermedium, das nach der Dehydrierung als Dibenzyltoluol zur Verfügung steht, wird über die Rohrleitung 21 der Trägermediumzwischenspeicherungs-Einheit 20 zugeführt. In der Trägermediumzwischenspeicherungs-Einheit 20 wird das Trägermedium im entladenen Zustand solange zwischengespeichert, bis ein Bedarf an Trägermedium in der Belade-Einheit 14 vorliegt. Dann wird das Trägermedium von der Trägermediumzwischenspeicherungs-Einheit 20 über die Rohrleitung 21 zur Belade-Einheit 14 gefördert.

Der in der Entlade-Einheit 19 freigesetzte Wasserstoff wird über die Rohrleitung 24 der Wasserstoffoxidations-Einheit 25 zugeführt und mit Sauerstoff in reiner Form oder mit Luftsauerstoff, der aus der Sauerstoffquelle 26 stammt, zusammengeführt. Dadurch entsteht elektrischer Strom, der über die Stromleitung 27 dem Stromnetz 28 zugeführt wird. Gleichzeitig entsteht Wasser, das an einen Wasserspeicher 30 abgeführt wird.

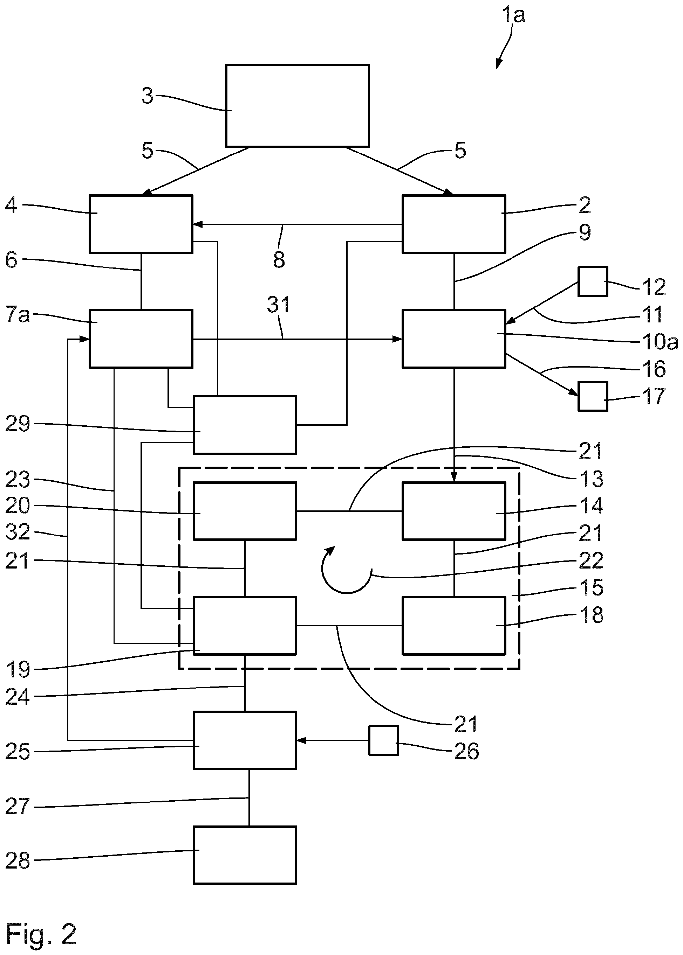

Im Folgenden wird unter Bezugnahme auf die Fig. 2 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen. Konstruktiv unterschiedliche, jedoch funktionell gleichartige Teile erhalten dieselben Bezugszeichen mit einem nachgestellten a.

Die Anlage 1a entspricht im Wesentlichen der Anlage 1 gemäß dem ersten Ausführungsbeispiel. Wesentlicher Unterschied ist die Ausführung der Wasserstofferzeugungs-Einheit 10a, die gemäß dem gezeigten Ausführungsbeispiel ein SOEC-Elektrolyseur ist. Der SOEC-Elektrolyseur ermöglicht die Elektrolyse von Wasserdampf, der über eine zusätzliche Rohrleitung 31, von der Wärmespeicherungs-Einheit 7a zur Verfügung gestellt wird. Dadurch, dass bereits Wasserdampf dem SOEC-Elektrolyseur zugeführt wird, ist der Energiebedarf für die Erzeugung von Wasserstoff reduziert. Insbesondere ist elektrische Energie zur Verdampfung des Wassers reduziert oder überhaupt nicht erforderlich. Besonders vorteilhaft ist deshalb die Verwendung der Wärmespeicherungs-Einheit 7a in Kombination mit dem SOEC-Elektrolyseur 10a. Die Wärmespeicherungs-Einheit 7a gemäß dem zweiten Ausführungsbeispiel zeichnet sich dadurch aus, dass bei der thermischen Beladung Wasserdampf freigesetzt wird. Dieser ohnehin freigesetzte Wasserdampf kann nun direkt zur Elektrolyse in dem SOEC-Elektrolyseur 10a genutzt werden. Beim thermischen Entladen der Wärmespeicherungs-Einheit 7a kann Wasserdampf aufgenommen werden, der insbesondere direkt aus der Wasserstoffoxidations-Einheit 25 stammt, die über eine weitere Rohrleitung 32 direkt mit der Wärmespeicherungs-Einheit 7a verbunden ist. Das bedeutet, dass die Wärmespeicherungs-Einheit 7a gleichzeitig als Wasserspeicherungs-Einheit dient.

Die Funktionsweise der Anlage 1a gemäß dem zweiten Ausführungsbeispiel entspricht der des ersten Ausführungsbeispiels. Während eines energiereichen Zeitraums wir dem SOEC-Elektrolyseur 10a ein Energiemenge von 10 kWh an elektrischer Energie von der Stromerzeugungs-Einheit 2 über die Stromleitung 9 zugeführt. Diese Energiemenge wird im SOEC-Elektrolyseur 4 bei einem Wirkungsgrad von 80 % zur Wasserstofferzeugung benutzt. Dieser erhöhte Wirkungsgrad ergibt sich durch die Nutzung von dampfförmigem Wasser aus der Wärmespeicherungs-Einheit 7a. Die gebildete Wasserstoffmenge wird in der Belade-Einheit 14 zur Hydrierung von Dibenzyltoluol zu Perhydro-Dibenzyltoluol verwendet, wobei der Wirkungsgrad für die Hydrierung 98 % beträgt. Das bedeutet, dass von der ursprünglichen eingesetzten Menge elektrischer Energie sich in der Wasserstoffspeicherungs-Vorrichtung eine Menge an Wasserstoff im lagerfähigen, flüssigen Zustand gebunden befindet, wobei diese Menge einer thermischen Energie von etwa 7,84 kWh entspricht. Für die Freisetzung des gesamten Wasserstoffs in der Wasserstoffspeicherungs-Vorrichtung 15 wird die Wärme aus der Wärmespeicherungs-Einheit 7a genutzt, sodass die Menge an freigesetztem, gasförmigen Wasserstoff vollständig in thermische Energie in Höhe von 7,84 kWh umgesetzt werden kann. Dieser Wasserstoff wird in der Wasserstoffoxidations-Einheit 25 in Form der PEM-Brennstoffzelle mit einem Wirkungsgrad 55 % verstromt. Daraus resultiert eine Menge elektrischer Energie von 4,31 kWh. Die Strom-zu-Strom-Effizienz beträgt also 43,1 %. Gegenüber einer Vergleichsanordnung mit einer Strom-zu-Strom-Effizienz von 25 % weist die erfindungsgemäße Anlage 1a eine Steigerung der Strom-zu-Strom-Effizienz von etwa 73 % auf.

## Patentansprüche

1. Anlage zum Freisetzen von Energie in Form von Wasserstoff umfassend
a. eine Stromerzeugungs-Einheit (2) zum Erzeugen von elektrischem Strom,
b. eine Entlade-Einheit (19) zum Entladen von Wasserstoff von einem beladenen Trägermedium und
c. eine Wärmeerzeugungs-Einheit (4) zum Erzeugen von Wärme und
d. eine Wärmespeicherungs-Einheit (7; 7a) zum Speichern der mittels der Wärmeerzeugungs-Einheit (4) erzeugten Wärme,
wobei die Wärmespeicherungs-Einheit (7; 7a) mit der Entlade-Einheit (19) zum Bereitstellen von Wärme verbunden ist,
**dadurch gekennzeichnet, dass** die Stromerzeugungs-Einheit (2) mit der Wärmeerzeugungs-Einheit (4) zur Bereitstellung von elektrischem Strom für die Wärmeerzeugung verbunden ist.

2. Anlage gemäß Anspruch 1, **dadurch gekennzeichnet, dass**
- eine Wasserstofferzeugungs-Einheit (10; 10a) zum Erzeugen von Wasserstoff vorgesehen ist,
- eine Wasserstoffspeicherungs-Vorrichtung (15) zum Speichern von Wasserstoff vorgesehen ist, die die Entlade-Einheit (19) und eine Belade-Einheit (14) zum Beladen eines Trägermediums mit dem in der Wasserstofferzeugungs-Einheit (10; 10a) erzeugten Wasserstoff umfasst.

3. Anlage gemäß Anspruch 1 oder 2, **dadurch gekennzeichnet, dass** die Stromerzeugungs-Einheit (2) mit der Wasserstofferzeugungs-Einheit (10; 10a) zur Bereitstellung von elektrischem Strom für die Wasserstofferzeugung verbunden ist, wobei insbesondere die Stromerzeugungs-Einheit (2) das Stromerzeugen aus regenerativen Energieformen (3) ermöglicht und insbesondere als Photovoltaik-Einheit, Windkraftwerk und/oder Wasserkraftwerk ausgeführt ist.

4. Anlage gemäß einem der vorstehenden Ansprüche, **gekennzeichnet durch** eine Wasserstoffoxidations-Einheit (25) zur Erzeugung von elektrischem Strom, wobei die Wasserstoffoxidations-Einheit (25) insbesondere zur Einspeisung des elektrischen Stroms mit einem Stromnetz (28) verbunden ist.

5. Anlage gemäß einem der vorstehenden Ansprüche, **dadurch gekennzeichnet, dass** die Entlade-Einheit (19) zur Förderung von entladenem Trägermedium mit der Belade-Einheit (14) verbunden ist, wobei insbesondere eine Trägermediumzwischenspeicherungs-Einheit (20) zum Speichern des entladenen Trägermediums zwischen der Entlade-Einheit (14) und der Belade-Einheit (19) angeordnet ist und wobei insbesondere eine Trägermediumspeicherungs-Einheit (18) zum Speichern des beladenen Trägermediums zwischen der Belade-Einheit (14) und der Entlade-Einheit (19) angeordnet ist.

6. Anlage gemäß einem der vorstehenden Ansprüche, **dadurch gekennzeichnet, dass** die Wasserstofferzeugungs-Einheit ein Elektrolyseur (10), insbesondere ein SOEC-Elektrolyseur (10a) ist, wobei der SOEC-Elektrolyseur (10a) mit der Wärmespeicherungs-Einheit (7a) zum Aufnehmen von Wasserdampf verbunden ist.

7. Anlage gemäß einem der vorstehenden Ansprüche, **dadurch gekennzeichnet, dass** in der Belade-Einheit (14) der Wasserstoff an das Trägermedium gebunden wird, insbesondere chemisch gebunden oder physisorptiv gebunden.

8. Anlage gemäß einem der vorstehenden Ansprüche, **dadurch gekennzeichnet, dass** die Trägermediumspeicherungs-Einheit (18) in die Belade-Einheit (14) integriert ist.

9. Anlage gemäß einem der Ansprüche 1 bis 7, **dadurch gekennzeichnet, dass** die Trägermediumspeicherungs-Einheit (18) einen Tank und insbesondere mindestens eine Tankleitung zum Verbinden mit einem externen Leitungssystem aufweist.

10. Anlage gemäß einem der vorstehenden Ansprüche, **gekennzeichnet durch** eine Regelungs-Einheit (29), die mit der Wärmeerzeugungs-Einheit (7; 7a) und mit der Entlade-Einheit (19) in bidirektionaler Signalverbindung steht.

11. Verfahren zum Freisetzen von Energie umfassend die Verfahrensschritte
- Bereitstellen von elektrischem Strom mittels einer Stromerzeugungs-Einheit (2) für eine Wärmeerzeugungs-Einheit (4),
- Erzeugen von Wärme mittels des bereitgestellten elektrischen Stroms in der Wärmeerzeugungs-Einheit (4),
- Speichern von mittels der Wärmeerzeugungs-Einheit (4) erzeugter Wärme mittels einer Wärmespeicherungs-Einheit (7; 7a),
- Entladen des Wasserstoffs von einem beladenen Trägermedium mittels einer Entlade-Einheit (19),
- Bereitstellen von Wärme mittels der Wärmespeicherungs-Einheit (7; 7a) in der Entlade-Einheit (19), wobei die Wärme für das Entladen des Wasserstoffs erforderlich ist.

12. Verfahren gemäß Anspruch 11, **gekennzeichnet durch**
- Erzeugen von Wasserstoff mittels einer Wasserstofferzeugungs-Einheit (10; 10a),
- Beladen eines Trägermediums mit dem in der Wasserstofferzeugungs-Einheit (10; 10a) erzeugten Wasserstoff mittels einer Belade-Einheit (14),
- Speichern des beladenen Trägermediums mittels einer Trägermediumspeicher-Einheit (18).

13. Verfahren gemäß Anspruch 11 oder 12, **dadurch gekennzeichnet, dass** das Erzeugen von Wärme während eines energiereichen Zeitraums erfolgt, wobei zum Erzeugen der Wärme regenerative Energie genutzt wird und/oder wobei das Entladen des Wasserstoffs von dem beladenen Trägermedium während eines energiearmen Zeitraums erfolgt.

14. Verfahren gemäß einem der Ansprüche 11 bis 13, **dadurch gekennzeichnet, dass** das Erzeugen von Wärme das Erhitzen eines, insbesondere flüssigen oder gasförmigen, Wärmeträgers umfasst.

15. Verfahren gemäß einem der Ansprüche 11 bis 14, **gekennzeichnet durch** ein geregeltes Durchführen des Verfahrens mittels einer Regelungs-Einheit (29) derart, dass die für das Entladen des Wasserstoffs erforderliche Wärme automatisiert und bedarfsangepasst bereitgestellt wird.

## Claims

1. System for releasing energy in the form of hydrogen comprising
a. a power generation unit (2) for generating electric power,
b. an unloading unit (19) for unloading hydrogen from a loaded carrier medium and
c. a heat generation unit (4) for generating heat and
d. a heat storage unit (7; 7a) for storing the heat generated by means of the heat generation unit (4),
wherein the heat storage unit (7; 7a) is connected with the unloading unit (19) in order to supply heat,
**characterized in that** the power generation unit (2) is connected with the heat generation unit (4) in order to supply electric power for heat generation.

2. System according to claim 1, **characterized in that**
- a hydrogen production unit (10; 10a) is provided for producing hydrogen,
- a hydrogen storage device (15) is provided for storing hydrogen, the hydrogen storage device (15) comprising the unloading unit (19) and a loading unit (14) for loading a carrier medium with the hydrogen produced in the hydrogen production unit (10; 10a).

3. System according to Claim 1 or 2, **characterized in that** the power generation unit (2) is connected with the hydrogen production unit (10; 10a) in order to supply electric power for hydrogen production, wherein the power generation unit (2) in particular enables the generation of power from renewable energy sources (3) and is designed in particular as a photovoltaic unit, a wind farm and/or a hydroelectric power station.

4. System according to one of the preceding claims **characterized by** a hydrogen oxidation unit (25) for generating electric power, wherein the hydrogen oxidation unit (25) is connected with a power supply network (28) in particular for delivering the electric power.

5. System according to one of the preceding claims **characterized in that** the unloading unit (19) for conveying unloaded carrier medium is connected with the loading unit (14), wherein in particular a carrier medium temporary storage unit (20) for storing the unloaded carrier medium is placed between the unloading unit (14) and the loading unit (19) and wherein in particular a carrier medium storage unit (18) for storing the loaded carrier medium is placed between the loading unit (14) and the unloading unit (19).

6. System according to one of the preceding claims **characterized in that** the hydrogen production unit is an electrolyser (10), in particular a SOEC (10a), wherein the SOEC (10a) is connected with the heat storage unit (7a) in order to absorb water vapour.

7. System according to one of the preceding claims **characterized in that** the hydrogen is bound with the carrier medium in the loading unit (14), in particular chemically bound or bound by physisorption.

8. System according to one of the preceding claims **characterized in that** the carrier medium storage unit (18) is built into the loading unit (14).

9. System according to one of Claims 1 to 7, **characterized in that** the carrier medium storage unit (18) has a tank and in particular at least one tank pipe for connection to an external pipeline system.

10. System according to one of the preceding claims **characterized by** a control unit (29), which has a bidirectional signal link with the heat generating unit (7; 7a) and the unloading unit (19).

11. Method for releasing energy comprising the process steps
- supplying electric power for a heat generation unit (4) by means of a power generation unit (2)
- generating heat in the a heat generation unit (4) by means of the electric power thus provided,
- storing heat generated by the heat generation unit (4) by means of a heat storage unit (7; 7a),
- unloading the hydrogen from a loaded carrier medium by means of an unloading unit (19),
- supplying heat by means of the heat storage unit (7; 7a) in the unloading unit (19), wherein the heat is required for unloading the hydrogen.

12. Method according to Claim 11, **characterized by**
- producing hydrogen by means of a hydrogen production unit (10; 10a),
- loading a carrier medium with the hydrogen produced in the hydrogen production unit (10; 10a) by means of a loading unit (14),
- storing the loaded carrier medium by means of a carrier medium storage unit (18).

13. Method according to Claim 11 or 12, **characterized in that** the generation of heat takes place during an energy-rich period, wherein, in order to generate the heat, renewable energy is used and/or wherein the hydrogen is unloaded from the loaded carrier medium during an energy-poor period.

14. Method according to one of Claims 11 to 13, **characterized in that** the generation of heat comprises heating in particular a liquid or gaseous heat carrier.

15. Method according to one of Claims 11 to 14, **characterized by** a controlled performance of the method by means of a control unit (29), such that the heat needed for unloading the hydrogen is supplied in an automated manner and adapted to the requirement.

## Revendications

1. Installation destinée à libérer de l'énergie sous la forme d'hydrogène, comprenant
a. une unité de production de courant (2) servant à produire du courant électrique,
b. une unité de décharge (19) servant à décharger de l'hydrogène d'un milieu porteur chargé et
c. une unité de production de chaleur (4) servant à produire de la chaleur et
d. une unité de stockage de chaleur (7 ; 7a) servant à stocker la chaleur produite par l'unité de production de chaleur (4),
l'unité de stockage de chaleur (7 ; 7a) étant reliée à l'unité de décharge (19) pour fournir de la chaleur,
**caractérisée en ce que** l'unité de production de courant (2) est reliée à l'unité de production de chaleur pour fournir du courant électrique destiné à la production de chaleur.

2. Installation selon la revendication 1, **caractérisée en ce que**
- une unité de production d'hydrogène (10 ; 10a) est prévue pour produire de l'hydrogène,
- un dispositif de stockage d'hydrogène (15) est prévu pour stocker de l'hydrogène, lequel dispositif de stockage d'hydrogène comprend l'unité de décharge (19) et une unité de chargement (14) servant à charger un milieu porteur avec l'hydrogène produit dans l'unité de production d'hydrogène (10 ; 10a).

3. Installation selon la revendication 1 ou 2, **caractérisée en ce que** l'unité de production de courant (2) est reliée à l'unité de production d'hydrogène (10 ; 10a) pour fournir du courant électrique servant à la production d'hydrogène, l'unité de production de courant (2) permettant notamment la production de courant à partir de formes d'énergie régénératives (3) et étant notamment réalisée sous la forme d'une unité photovoltaïque, d'une centrale éolienne et/ou d'une centrale hydroélectrique.

4. Installation selon l'une des revendications précédentes, **caractérisée par** une unité d'oxydation d'hydrogène (25) servant à produire du courant électrique, l'unité d'oxydation d'hydrogène (25) étant reliée à un réseau de courant (28) notamment pour injecter le courant électrique.

5. Installation selon l'une des revendications précédentes, **caractérisée en ce que** l'unité de décharge (19) est reliée à l'unité de charge (14) pour transporter le milieu porteur déchargé, une unité de stockage du milieu porteur (20) servant au stockage du milieu porteur déchargé étant notamment disposée entre l'unité de décharge (14) et l'unité de charge (19) et une unité de stockage du milieu porteur (18) servant au stockage du milieu porteur chargé étant notamment disposée entre l'unité de charge (14) et l'unité de décharge (19).

6. Installation selon l'une des revendications précédentes, **caractérisée en ce que** l'unité de production d'hydrogène est un électrolyseur (10), notamment un électrolyseur SOEC (10a), l'électrolyseur SOEC (10a) étant relié à l'unité de stockage de chaleur (7a) pour recevoir de la vapeur d'eau.

7. Installation selon l'une des revendications précédentes, **caractérisée en ce que**, dans l'unité de charge (14), l'hydrogène est lié au milieu porteur, notamment lié chimiquement ou lié par physisorption.

8. Installation selon l'une des revendications précédentes, **caractérisée en ce que** l'unité de stockage du milieu porteur (18) est intégrée dans l'unité de charge (14).

9. Installation selon l'une des revendications 1 à 7, **caractérisée en ce que** l'unité de stockage du milieu porteur (18) comporte un réservoir et notamment au moins un conduit de réservoir destiné à être relier à un système de canalisation externe.

10. Installation selon l'une des revendications précédentes, **caractérisée par** une unité de régulation (29) communiquant par une liaison de signal bidirectionnelle avec l'unité de production de chaleur (7 ; 7a) et l'unité de décharge (19).

11. Procédé de libération d'énergie comprenant les étapes
- de fourniture de courant électrique au moyen d'une unité de production d'énergie (2) à destination d'une unité de production de chaleur (4),
- de production de chaleur dans l'unité de production de chaleur (4) au moyen du courant électrique fourni,
- de stockage de chaleur produite par l'unité de production de chaleur (4) au moyen d'une unité de stockage de chaleur (7 ; 7a),
- de décharge de l'hydrogène d'un milieu porteur chargé au moyen d'une unité de décharge (19),
- de fourniture de chaleur au moyen de l'unité de stockage de chaleur (7 ; 7a) dans l'unité de décharge (19), la chaleur étant nécessaire pour décharger l'hydrogène.

12. Procédé selon la revendication 11, **caractérisé par**
- la production d'hydrogène au moyen d'une unité de production d'hydrogène (10 ; 10a),
- la charge d'un milieu porteur avec l'hydrogène produit dans l'unité de production d'hydrogène (10, 10a), au moyen d'une unité de charge (14),
- le stockage du milieu porteur chargé au moyen d'une unité de stockage du milieu porteur (18).

13. Procédé selon la revendication 11 ou 12, **caractérisé en ce que** la production de chaleur est effectuée pendant un intervalle de temps riche en énergie, l'énergie régénérative étant utilisée pour produire de la chaleur et/ou la décharge de l'hydrogène du milieu porteur chargé étant effectuée pendant un intervalle de temps pauvre en énergie.

14. Procédé selon l'une des revendications 11 à 13, **caractérisé en ce que** la production de chaleur comprend le chauffage d'un agent caloporteur, notamment liquide ou gazeux.

15. Procédé selon l'une des revendications 11 à 14, **caractérisé par** une mise en oeuvre régulée du procédé au moyen d'une unité de régulation (29) de sorte que la chaleur nécessaire à la décharge de l'hydrogène est fournie de manière automatisée et adaptée à la demande.
